(19) **Europäisches Patentamt / European Patent Office / Office européen des brevets**

(11) **EP 4 175 310 A1**

(12) **EUROPEAN PATENT APPLICATION**

(43) Date of publication:
**03.05.2023 Bulletin 2023/18**

(21) Application number: **21205159.3**

(22) Date of filing: **28.10.2021**

(51) International Patent Classification (IPC):
**H04N 21/8358** (2011.01)    **H04N 21/4627** (2011.01)
**G06F 21/10** (2013.01)

(52) Cooperative Patent Classification (CPC):
**H04N 21/8358; G06F 21/10; H04N 21/4367; H04N 21/4627; H04N 21/63345;** G06F 2221/2111

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **GE, Xin**
  **Eindhoven (NL)**
• **GU, Hai**
  **Eindhoven (NL)**
• **MA, Fulong**
  **Eindhoven (NL)**

(74) Representative: **Philips Intellectual Property & Standards**
**High Tech Campus 52**
**5656 AG Eindhoven (NL)**

(54) **CHECKING LOCALITY OF DEVICES**

(57)    Proposed are concepts for checking the locality of devices to determine if data (e.g. media content) can be shared between the devices, which may therefore aid secure sharing of data or media content between the devices. In particular, it is proposed that a simple way to check if two devices are in/at the same location (i.e. in close vicinity of each other) is to check if they are visible to each other. By one device displaying information to the other device, the displayed information can be used to confirm that the devices are visible to each and thus infer a shared locality. Such information may comprise (or be based on) information that should only be known to the two devices, thereby facilitating verification of the devices.

FIG. 2

EP 4 175 310 A1

**Description**

FIELD OF THE INVENTION

The present invention relates to sharing data between devices, and more particularly to checking the locality of devices to determine if data can be shared therebetween.

BACKGROUND OF THE INVENTION

Sharing data (e.g. media content such as video images) between devices (e.g. a transmitter and a receiver) via a wireless communication link is widely-known. An example of such data sharing is screen casting media content from a smartphone or portable computing device to a display (e.g. TV) that is connected to the same wireless communication network.

However, such screen casting is typically not possible for content that is protected using Digital rights Management (DRM) tools, because, as the receiver (e.g. TV) side there may not be DRM available.

High-bandwidth Digital Content Protection (HDCP) provides a digital copy protection approach for digital audio and video content (A/V content) transmitted across cables (e.g. DVI, HDMI) in wired digital systems. HDCP attempts to prevent copy of such A/V content.

A locality check with Round Trip Time (RTT) is adopted by HDCP 2.x specification as an approach of protection of digital copyright for cable connectivity. Such kind of solutions are, for example, disclosed in US 8,886,939 B2 assigned to Philips (Kamperman) or US2011/09668A1 assigned to Samsung (Singh, etc.).

By way of example, for a locality check between an HDCP transmitter and HDCP receiver, the HDCP transmitter, after initiating the locality check, sets a watchdog timer and waits for 20 ms before which it expects to receive a response from the HDCP receiver. The locality check is performed to ensure that content protection keys can only be exchanged if the RTT is less than 20 ms for point-to-point communication.

However, such RTT approaches are typically not applicable to wireless network environments e.g. due to unexpected network delays.

SUMMARY OF THE INVENTION

The invention is defined by the claims.

According to examples in accordance with an aspect of the invention, there is provided a method for checking locality of a first device and a second device to determine if data can be shared between the first and second devices. The method comprises: obtaining, at the first and second devices, a secret (the first device creating the secret, and the second one receiving it); generating, at the second device, an irreversible value based on the secret; displaying, at the second device, a visual representation of the irreversible value; capturing, at the first device, the displayed visual representation; and processing, at the first device, the captured visual representation to determine if the second device is within the locality of the first device. Processing the captured visual representation comprises: extracting the irreversible value from the captured visual representation; analyzing the secret and the extracted irreversible value to determine an analysis result; and determining if the second device is in the locality of the first device based on the analysis result.

At the first device means in a vicinity so that the other device can be seen, e.g. the first device having a camera comprised, or being directly connected with a local camera, which can be pointed to the second device, in particular its display. Locality typically means the same room, i.e. a limited size area within which the two devices can be positioned so that at least the first device can see the second one.

Proposed concepts thus aim to provide schemes, solutions, concepts, designs, methods and systems pertaining to checking locality of a first device and a second device to determine if data (e.g. media content) may be shared between the devices, i.e. without e.g. capturing the data by an undesired device, such as a device under control of a pirate intending to illegally obtain the media content. In particular, embodiments of the invention propose robust locality checking concepts which do not rely on a network environment (unlike the conventional approach in DTCP locality checking).

In particular, it is proposed that a simple way to check if two devices are in/at the same location (i.e. in close vicinity to each other) is to check if they are visible to each other. That is, if one device is visible to another device, such co-visibility (i.e. the ability of one device to see the other) provides strong evidence that the two devices are in the same location (i.e. share the same locality). By one device displaying information to the other device, the displayed information can be used to confirm that the devices are visible to each and thus infer a shared locality. Such information may comprise (or be based on) information that should only be known to the two devices, thereby facilitating verification of the devices.

For instance, it is proposed that a secret may be available to the two devices, and the visual display of information using the secret may enable one device to check that the other device is at the same locality. In this way, the locality of two devices can be verified.

Embodiments may therefore check if two devices are in/at the same location (e.g. in the same room) so as to determine if data (e.g. media content) can be shared between the devices. The proposed locality checking concept(s) may thus aid secure sharing of data or media content between two devices.

Proposed embodiments may provide the advantage that a locality check of two (or more devices) can be undertaken in a simple and secure manner using a visual checking concept. Such locality checking may cater for securely sharing multimedia content between devices. By way of example, the proposed concept(s) may support screen casting from a portable computing device, e.g. mobile phone, to another device, e.g. a TV. Through the use of the proposed locality checking concept(s), the data content may only be shared in a local area (i.e. shared location) to prevent/avoid abuse of the sharing per a data content provider's request.

In other words, embodiments propose a visual-based locality checking approach that may aid controlled, restricted and/or secures sharing of data between devices. Accordingly, embodiments may be used in relation to local data sharing (e.g. screen casting) so as to protection against unauthorised copying and/or sharing of data. Such embodiments may also support copyright protection. Improved copyright protection or digital rights management may therefore be provided by proposed concepts.

In some embodiments, the analyzing may comprise: generating a verification value based on the secret; comparing the verification secret and the extracted irreversible value to determine a comparison result; and determining if the second device is in the locality of the first device based on the comparison result. That is, the first device may verify that the irreversible value provided by the second device matches an expected value. For instance, a simple hashing function may be applied to the secret at the first and second device in order to generate respective values at the first and second devices. With the display of the generated value at the second device, the first device can ascertain whether or not the displayed value is as expected (by making a comparison of the values).

By way of example, if the comparison result indicates the verification secret matches the extracted irreversible value, it may be determined that the second device is within the locality of the first device. Conversely, if the comparison result indicates the verification secret does not match the extracted irreversible value, it may be determined that the second device is not within the locality of the first device.

Some embodiments may further comprise generating, at the second device, a second device timestamp value. Generating an irreversible value at the second device may then be further based on the second device timestamp value. Further, processing the captured visual representation may then comprise: generating a first device timestamp value; and analyzing the secret, the first device timestamp value and the extracted irreversible value to determine an analysis result. Such an approach may, for example, be utilized to counter an attempt to feign/fake locality by capturing the visual representation and transmitting the visual representation to a different location (for subsequent display at the different location). In particular, use of a timestamp may facilitate a check for the presence of a time delay cause by capture and transmission of the visual representation to another location. Embodiments may therefore be adapted to protect against attempts to undermine or otherwise defy the proposed locality checking method(s).

Yet further, some embodiments may also comprise rounding at least one of the first and second timestamp values according to a target accuracy value. In this way, time values may be pre-processed to meet precision requirements, thus catering for different applications.

By way of example, the analyzing may comprise: generating a verification value based on the secret and the first device timestamp value; comparing the verification secret and the extracted irreversible value to determine a comparison result; and determining if the second device is in the locality of the first device based on the comparison result.

To aid or improve accuracy of the use of timestamps, embodiments may further comprise: synchronizing a reference clock of the first and second devices. The first and second device timestamp values may then be generated based on the synchronized reference clock of the first and second devices, respectively. In this way, discrepancies between reference clocks or timers used by the first and second devices may be avoided, thus improving accuracy.

In some exemplary embodiments, displaying a visual representation of the irreversible value may comprise: generating an image comprising a watermark, the watermark having the irreversible value embedded therein; and displaying, as the visual representation of the irreversible value, the generated image with watermark. By way of example, the watermark may be generated using a fragile watermarking technique. A fragile watermark is specifically designed to detect certain changes of the image. It can be especially designed so that it changes significantly under certain operations, such as particular manners of attempting to fraud the system remotely, but not under other changes (e.g. illumination changes). Such an approach may, for example, be utilized to counter an attempt to feign/fake locality by capturing the visual representation and transmitting the visual representation to a different location (for subsequent display at the different location). In particular, use of a watermark may facilitate a check for the presence of a corruption of the visual representation (e.g. increased image noise, reduction in image quality, etc.) caused by its capture and transmission of the visual representation to another location. Embodiments may thus be adapted to protect against attempts to undermine or otherwise defy the proposed locality checking method(s).

Also, processing the captured visual representation may comprise: detecting the presence of the watermark in the captured visual representation; responsive to not detecting the presence of the watermark, determining that the second device is not within the locality of the first device; and responsive to detecting the presence of the watermark, extracting the irreversible value from the detected watermark. In this way, a watermark may provide a hidden authentication object that has a dual-purpose, e.g. authentication of the visual representation and carrier of the irreversible value.

In other exemplary embodiments, displaying a visual representation of the irreversible value may comprise: generating a machine readable code comprising the irreversible value; and displaying, as the visual representation of the irreversible value, the machine readable code. For example, the machine-readable code may comprise a linear barcode and/or a 2D matrix code. Matrix codes are typically a rectangle of pixels, which may have several different colors, or black and white pixels such as e.g. a QR code. Efficient visual representations of information that are not readable by a human may thus be employed, thereby protecting the irreversible value from being visually read/understood by a human. This may provide additional protection against attempts to undermine, reverse-engineer or hack the proposed locality checking method(s).

Some embodiments may further comprise the step of generating the secret at the first device or the second device. Thus, the secret may be generated by either of the devices. Alternatively, in other embodiments, the secret may be obtained from another source (e.g. a trusted server). The proposed concept(s) thus cater for the provision of the secret to the devices in many different ways.

Purely by way of example, the first device may comprise a mobile computing device, and the second device may comprise a display device having communication interface configured to receive the communicated secret. Embodiments may thus be used to support screen sharing, or screen casting, from a mobile phone to a smart television, for example, wherein distribution of the shared content to other remotely-located devices can be prevented.

According to examples in accordance with another aspect of the invention, there is provided a method for establishing a communication link between a first device and a second device. The method comprises checking locality of the first device and the second device according to a proposed embodiment; responsive to determining that the second device is within the locality of the first device, establishing a communication link between the first device and the second device; and responsive to determining that the second device is not within the locality of the first device, preventing establishment of a communication link between the first device and the second device.

Thus, there may be provided concepts for ensuring that a communication link (e.g. for communication media content) between two devices is only established if the devices are in the same locality (i.e. share the same general location).

According to another aspect, there is provided a computer program product for, wherein the computer program product comprises a computer-readable storage medium having computer-readable program code embodied therewith, the computer-readable program code configured to perform all of the steps of a proposed embodiment.

Thus, there may also be provided a computer system comprising: a computer program product according to proposed embodiment; and one or more processors adapted to perform a method according to a proposed concept by execution of the computer-readable program code of said computer program product.

According to another aspect of the invention, there is provided a first device configured to check the locality of the first device and a second device for determining if data can be shared between the first and a second device. The first device comprises a first processing unit configured to control the first device to: obtain a secret; capture a visual representation an irreversible value displayed by the second device; extract the irreversible value from the captured visual representation; analyze the secret and the extracted irreversible value to determine an analysis result; and determine if the second device is in the locality of the first device based on the analysis result. The first device may for, example, comprise a mobile computing device (such a smartphone or a tablet computer).

According to another aspect of the invention, there is provided a second device configured to share data between a first and the second device. The second device comprises a second processing unit configured to control the second device to: obtain a secret; generate an irreversible value based on the secret; and display a visual representation of the irreversible value. The second device may, for example, comprise a display device having a communication interface configured to receive the secret (e.g. a 'smart' TV).

According to yet another aspect of the invention, there may be provided a data sharing system comprising the first device according to a proposed embodiment and the second device according to a proposed embodiment. The first device may thus check the locality of the first device and the second device so as to determine whether data is permitted to be shared between the first and second devices. Embodiments may therefore provide part or all of a data sharing system for sharing or streaming media content between two nearby devices. That is, embodiments may provide apparatus for local sharing (i.e. streaming or screencasting) of multimedia content between two devices, wherein the apparatus is configured to check that the two devices are the same locality.

These and other aspects of the invention will be apparent from and elucidated with reference to the embodiment(s) described hereinafter.

BRIEF DESCRIPTION OF THE DRAWINGS

For a better understanding of the invention, and to show more clearly how it may be carried into effect, reference will now be made, by way of example only, to the accompanying drawings, in which:

Figure 1 depicts an exemplary embodiment of checking locality of a first device and a second device to determine if data can be shared between the first and second devices;

Figure 2 is a flow diagram of a method for checking locality of a first device and a second device according to an embodiment;

Figure 3 depicts the process steps of a method for checking locality of a first device and a second device according to another embodiment;

Figure 4 depicts the process steps of a method for checking locality of a first device and a second device according to yet another embodiment; and

Figure 5 is a simplified block diagram of a computer within which one or more parts of an embodiment may be employed.

DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. The mere fact that certain measures are recited in mutually different dependent claims does not indicate that a combination of these measures cannot be used to advantage.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

It should be understood that the Figures are merely schematic and are not drawn to scale. It should also be understood that the same reference numerals are used throughout the Figures to indicate the same or similar parts.

The invention proposes concepts for checking the locality of devices to determine if data (e.g. media content) can be shared between the devices, which may therefore aid secure sharing of data or media content between the devices. In particular, embodiments may provide a method and/or system which employs a visual-based locality checking approach, and this may support the secure sharing of data or multimedia content between devices.

In particular, proposed concepts may provide an approach to checking locality of a first device and a second device to determine if data (e.g. media content) can be shared between the devices. Accordingly, embodiments may be used in relation to screen casting and/or provide improved local data/content sharing functionalities.

By way of example only, illustrative embodiments may be utilized in many different types of data/content sharing environments, such as a person's home, a workplace, a clinical/medical environment, a manufacturing or engineering facility, etc.

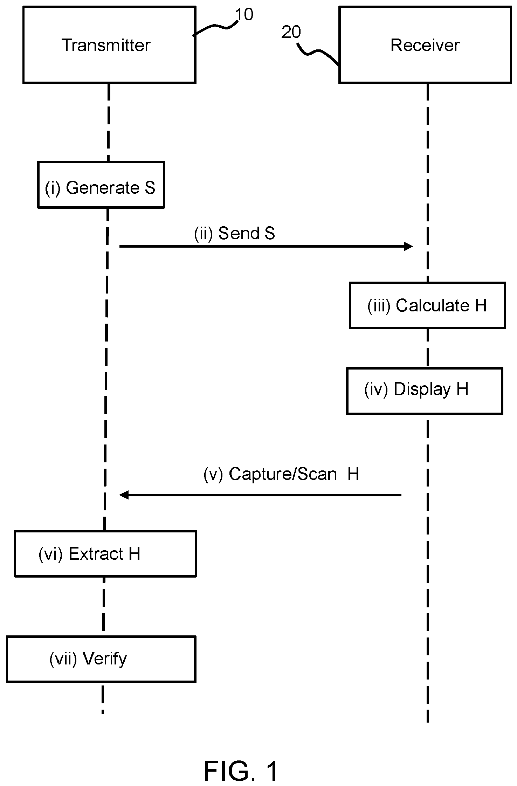

Referring to Figure 1, there is depicted an exemplary embodiment of checking locality of a first device 10 and a second device 20 to determine if data can be shared between the first and second devices. In this example embodiment, the first device 10 is a transmitter, and the second device 20 is a receiver.

The main process steps of the exemplary embodiment may be summarized as follows:

(i) The transmitter 10 firstly generates a secret S:

(ii) The transmitter 10 then sends the secret S to the receiver;

(iii) The receiver 20 receives the secret S and creates an irreversible value H using the secret S (e.g. by hash calculation);

(iv) The receiver 20 displays a visual representation (e.g. an image) of the irreversible value H on a display screen of the receiver;

(v) The transmitter 10 captures/scans the displayed image;

(vi) The transmitter 10 extracts the irreversible value H from the captured/scanned image;

(vii) The transmitter 10 verifies the extracted irreversible value H by comparing it against the secret S. If extracted irreversible value H matches an expected value (according to secret S), the verification process is passed, otherwise the verification process is failed.

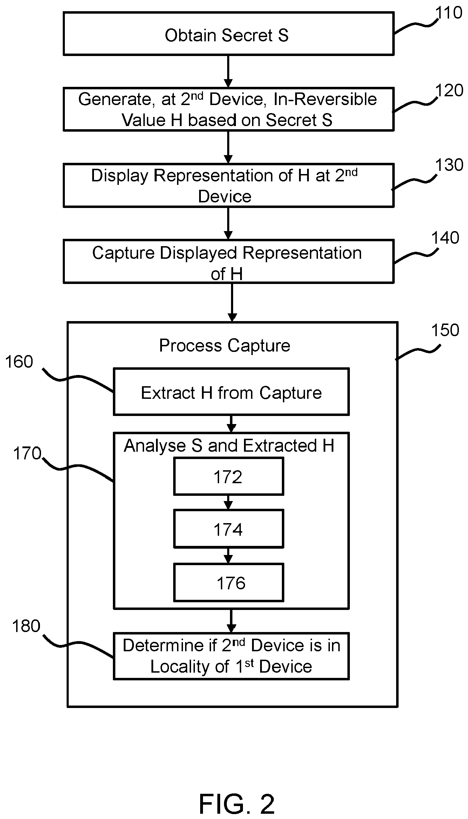

By way of further explanation of the proposed concept(s), an exemplary embodiment of a method for checking locality of a first device and a second device will now be describe with reference to Figure 2.

Figure 2 depicts a flow diagram of a method for checking locality of a first device and a second device according to an embodiment. The check for locality can be used to determine if data can be shared between the first and second devices.

The first step 110 of the method comprises obtaining, at the first and second devices, a secret S. For instance, the first device may generate the secret S and then communicate the S to the second device, or vice versa. Alternatively, the first and second devices may each retrieve the secret S from a trusted source, e.g. trusted server, via a secure communication link or the Internet.

Step 120 then comprises generating, at the second device, an irreversible value H based on the secret S. This may, for example, comprise using a hashing function to generate a hash value H using the secret S.

In step 130, a visual representation of the irreversible value H is displayed at the second device, e.g. via a display screen of the second device.

The displayed visual representation is then captured by the first device in step 140, e.g. using an image capture device such a digital camera.

At the first device, the captured visual representation in then processed in step 150 to determine if the second device is within the locality of the first device.

In this example, the step 150 of processing the captured visual representation comprises three sub steps: (step 160) extracting the irreversible value H from the captured visual representation; (step 170) analyzing the secret S and the extracted irreversible value H to determine an analysis result; and (step 180) determining if the second device is in the locality of the first device based on the analysis result.

Specifically, the step 170 of analyzing comprises: (step 172) generating a verification value Hv based on the secret S; (step 174) comparing the verification secret Hv and the extracted irreversible value H to determine a comparison result; and (step 176) determining if the second device is in the locality of the first device based on the comparison result. Here, if the comparison result indicates that the verification secret Hv matches the extracted irreversible value H, it is determined that the second device is within the locality of the first device. Conversely, if the comparison result indicates that the verification secret Hv does not match the extracted irreversible value H, it is determined that the second device is not within the locality of the first device.

To tackle counterfeiting of the displayed visual representation, two exemplary options may be employed: (1) an embodiment may be extended with a time delay check; or (2) use of a watermark, such as a watermark that is sensitive to capture operations (i.e. a fragile watermark that prevents secondary capture).

By way of example of option (1) above, an extension of a proposed method which employs a time delay check may be summarized as follows:

(i) The first and second device each have a mechanism for time synchronizing;
(ii) The first device generates a secret S;
(iii) The first device then communicates information to the second device including the secret S;
(iv) The second device calculates a hash value H of the secret S, and also generates a timestamp value T;
(v) The second device displays a QR code representing the hash value H and timestamp value T. Here it is noted that the second device re-calculates the hash value H and timestamp value T after a short time period, e.g. 1 second, if the locality check is not completed, and refresh the displayed QR code according to the re-calculated hash value H and updated timestamp value T;
(vi) The first device uses a camera to scan the QR code and parses the captured QR to extract H, and also records the time T' of doing so.
(viii) The first device calculates its own value H' based on the S.
(ix) The first device then compares H and H' and T and T'
(x) If the locality check result is deemed positive (i.e. the compared values match), it is determined that the first and second devices are in the same locality and screen casting (e.g. from the first device to the second device) is permitted. Otherwise, if the locality check result is deemed negative (i.e. the compared values do not match), it is determined that the first and second devices are not in the same locality and screen casting is not permitted

By way of example of option (2) above, an embedded watermark may be adapted to be sensitive to operations. For instance, the watermark may be configured so that image capture adds noise to the watermark. That is, a fragile watermark may be employed to not emphasize robustness, such that the watermark is not robust enough to support a second capture. In this way, a double-copy of the image will make the watermark undetectable, thereby preventing any copy action.

There are many known fragile watermark algorithms and so detailed discussion of the various fragile watermarking techniques are hereby omitted for the purpose of conciseness. However, it will be understood that it may be preferable to configure the watermarking technique so that it has an appropriate threshold value for judging the detection successful or not. Tests may therefore be preferred in order to determine an appropriate watermarking technique depending on implementation specifics (e.g. to produce a watermark that is detectable/usable in a first capture, but then undetectable/unusable in subsequent capture (i.e. capture of the first capture).

As an example of option (2), an extension of a proposed method which employs a watermark may be summarized as follows:

(i) The first device firstly sends a random nonce to the second device;
(ii) The second device embeds the nonce with the form of watermark into a specific image, then displays the image (with watermark) on a display screen;
(iii) The first device then captures/scans the display screen;
(iv) If the watermark is detected in the scan/capture, the watermark is extracted and the nonce value checked. If value is the same, check is OK, otherwise the locality check is failed;
(v) If the watermark is not detected in the scan/capture, locality check is failed.

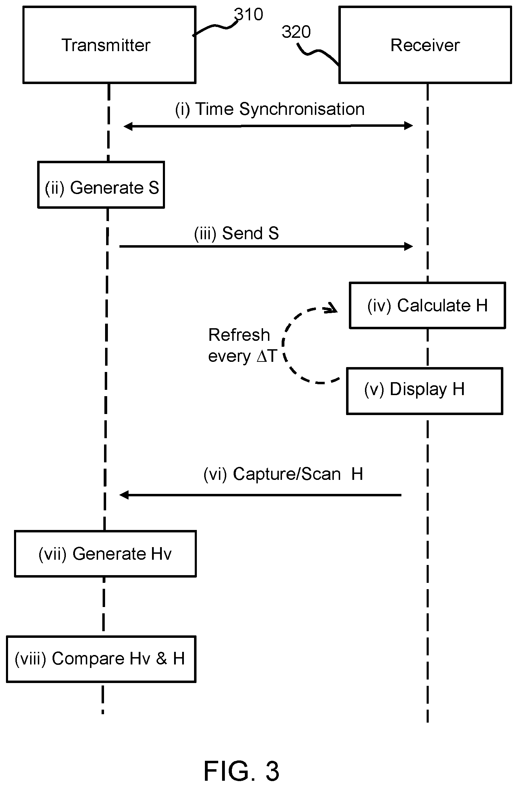

By way of yet further example of the proposed concept(s), an exemplary embodiment of a method for checking locality of a first device and a second device will now be described with reference to Figure 3.

Figure 3 depicts the process steps of a method for checking locality of a first device 310 and a second device 320 according to an embodiment. In this example embodiment, the first device 310 is a mobile phone comprising a transmitter, and the second device is a smart TV comprising a receiver.

Here, it is noted that, before beginning the whole procedure, it may be preferable for the transmitter to start a timer with a timeout value (e.g. 20 seconds). If the timer is out, the transmitter can then restart the check procedure with a new generated nonce.

The main process steps of the exemplary embodiment may be summarized as follows:

(i) The transmitter 310 and the receiver 320 each have a mechanism for time synchronization. In this way, a reference clock of the transmitter 310 and the receiver 320 can be synchronized. Such time synchronization can be done in many ways, but purely way of example, a NTP protocol may be used so that each device gets an accurate time from a trusted internet time source.
(ii) The transmitter 310 generates a secret S, such as a random number which is not known by other devices.
(iii) The transmitter 310 sends the secret S to the receiver 320.
(iv) The receiver 320 calculates the hash H based on the secret S and a timestamp value T (corresponding to the time that the receiver undertakes the calculation of the hash H). By way of example, the timestamp value T normally may be represented as a number, e.g. the seconds since 00:00:00 Jan. 1, 1970. H can then be calculated using some hash algorithm, such as the following equation:

$$H = SHA\text{-}256(S|T) \qquad (1),$$

where S and T are represented in string and | is a concatenation.

(v) A QR code (or other machine readable code) comprising the H value is then displayed by the receiver 320. The receiver 320 repeat steps (iv) and (v) after a short time period $\Delta T$ (e.g. 1-5 seconds) so as to refresh the hash H and thus refresh the QR code. Here, the time period $\Delta T$ may be selected so that it prevents a user taking a photo of the QR code and sending it to a remote user to scan. Thus, by way of example, a time period $\Delta T$ in the range of 1-5 seconds may be appropriates. However, shorter time periods, such as 0.1 seconds, 0.5 seconds, etc., may be preferable in some embodiments. Conversely, other embodiments may employ longer time periods (i.e. larger values for $\Delta T$).
Also, in some embodiments, the timestamp values may be pre-processed to have the same precision as the time period. For instance, if the time period $\Delta T$ is 1 second, the precision will be Is. If the time Toriginal is represented using milliseconds, and the time period is selected as t milliseconds, T can then be calculated as:

$$T = Round\ (Toriginal\ /t)^*t \qquad (2)$$

(vi) The transmitter 310 uses a camera to scan the displayed QR code and thus capture get H. At the same time, the transmitter 310 also generates its own timestamp value T', thus identifying the time of scan/capture by the transmitter 310. If the transmitter 310 is in the same locality, it's timestamp value T' should be the approximately same as the time T in the QR code. Typically, the system delay may be in the order of milliseconds, and so T and T' may differ by a small amount (e.g. milliseconds).

(vii) The transmitter calculates its own hash H' based on T' and S. H' is calculated using the same method as above for calculating H at the receiver, e.g.:

$$H'=SHA\text{-}256(S|T') \hspace{3cm} (3)$$

If T was rounded using (2) above, then T' should also be processed using (2) before undertaking the calculation of equation (3).

With this approach, the H' should be the same as H, if the transmitter 310 and the receiver 320 are in the same locality (because T should be the same as T'). If a remote user tries to view the content, e.g. by taking a photo of the QR code and send to the valid device for scanning, there will be a significant delay Tdelay to take photo and send the photo, so T'=T+Tdelay. As a result, T' will not equal T, so H will not equal H', thus causing the locality check to fail.

(viii) The transmitter 310 compares H and H'. If H and H' are the same, the locality check result is positive, and it is thus determined that the transmitter 310 and the receiver 320 are in the same locality. Otherwise, the result is negative, and it is thus determined that the transmitter 310 and the receiver 320 are not in the same locality.

In other embodiments, the transmitter 310 may calculate multiple hash values H' using a wide selection of timestamp values T', e.g. by addition 1-n delay of short time periods t, using the following equations:

$$T'n = T'+n*t \hspace{3cm} (4).$$

$$H'n=SHA\text{-}256(S|T'n) \hspace{3cm} (5)$$

Then, if H equals any of H'n, the locality check is passed.

Checking is usually part of the entire negotiation procedure before screen casting.

Suppose both sides (i.e. both first and second devices) have exchanged a shared key that can be used as encryption Key for watermark processing. A watermark can be employed as part of the checking process. For example, embodiments may comprise detecting the presence of the watermark in the captured visual representation. Responsive to not detecting the presence of the watermark, it may be determining that the second device is not within the locality of the first device.

Such watermarks may use many different forms of identification information. For example, a random nonce (e.g. 64 bits) may be used as a watermark.

Both sides may have stored the original image for later use of watermark embedding and extraction. For improved capture by phone camera, a created image (i.e. visual representation of H) with watermark may be only displayed in part of the display screen. By arranging display of a watermark in a specific display area by default, detection may be simplified.

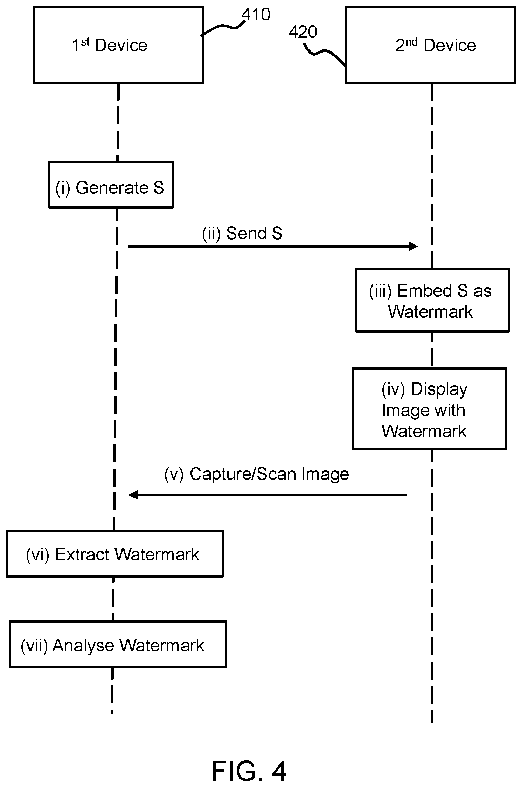

By way of example, of an exemplary embodiment employing a watermark will now be described with reference to Figure 4.

Figure 4 depicts the process steps of a method for checking locality of a first device 410 and a second device 420 according to an embodiment. In this example embodiment, the first device 410 is a laptop computer, and the second device is a tablet computer.

The main process steps of the exemplary embodiment of Figure 4 may be summarized as follows:

(i) The first device 410 generates a secret S, which in this example is a random nonce N1;

(ii) The first device 410 sends the secret S (i.e. N1) to the second device 420.

(iii) The second device 420 uses a watermarking module to embed the secret (i.e. N1) as a watermark in a prepared image, thereby generating a visual representation of the secret S

(iv) The second device 420 displays the generated image (with embedded watermark) in the central area of its display screen;

(v) The first device 410 scans/captures the image displayed by the second device.

(vi) The first device 410 extracts the watermark. If the watermark is not detected, locality check process is failed;

(vii) The first device analyses the extracted watermark. Specifically, the first device 410 compares the extracted watermark with the secret S (i.e. N1) to determine if the secret embedded in the watermark matches that generated at the first device.

Analyse means that the first device checks the various aspects of the second device, e.g. whether it is a device which obtained the secret, and checks whether the secret has been communicated back to the first device visually (in case of irreversible operations, the first device can e.g. generate the same irreversible value for comparison, and in case of some specific watermarking it can e.g. check the presence of such watermark coding inter alia at least the secret). Any further information of the second apparatus of various embodiments, such as e.g. at which moment in time the second apparatus received the secret, may also be analysed. If the comparison result confirms the secrets match, the locality check is passed. Otherwise, the locality check is failed.

If a fragile watermarking technique is employed, the first device 410 will not detect an effective watermark if it scans/captures a re-captured image (instead of the display of the second device).

Thus, according to the proposed concept(s), a display of a second device may be employed to display an irreversible value for checking locality of the second device against another device (e.g. a first device). A proposed locality checking method may use a secret value and a displayed irreversible value to determine if devices are in the same locality of the display. This can be used to determine if data can be shared between the devices. Also provided is a system that implements the proposed concept(s) for checking locality of two (or more) devices)

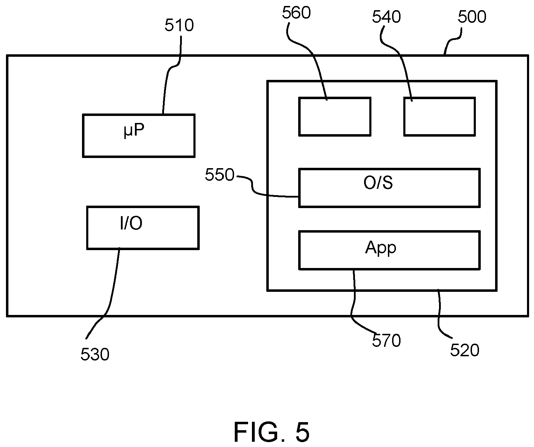

Figure 5 illustrates an example of a computer 500 within which one or more parts of an embodiment may be employed. The computer may be e.g. a mobile phone. Various operations discussed above may utilize the capabilities of the computer 500. For example, one or more parts of a system for providing a subject-specific user interface may be incorporated in any element, module, application, and/or component discussed herein. In this regard, it is to be understood that system functional blocks can run on a single computer or may be distributed over several computers and locations (e.g. connected via internet).

The computer 500 includes, but is not limited to, PCs, workstations, laptops, PDAs, palm devices, servers, storages, and the like. Generally, in terms of hardware architecture, the computer 500 may include one or more processors 510 (which may e.g. do the analysis of the watermark), memory 520, and one or more I/O devices 570 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 510 may typically be a hardware device for executing software that can be stored in the memory 520. It may also be a (part of) a dedicated processor managing the secure data communication. The processor 510 can be virtually any custom made or commercially available processor, a central processing unit (CPU), a digital signal processor (DSP), or an auxiliary processor among several processors associated with the computer 500, and the processor 510 may be a semiconductor based microprocessor (in the form of a microchip) or a microprocessor.

The memory 520 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 520 may incorporate electronic, magnetic, optical, and/or other types of storage media. Note that the memory 520 can have a distributed architecture, where various components are situated remote from one another, but can be accessed by the processor 510.

The software in the memory 520 may include one or more separate programs, each of which comprises an ordered listing of executable instructions for implementing logical functions. The software in the memory 520 may include a suitable operating system (O/S) 550, compiler 540, source code 560, and one or more applications 570 in accordance with exemplary embodiments. As illustrated, the application 570 comprises numerous functional components for implementing the features and operations of the exemplary embodiments. The application 570 of the computer 500 may represent various applications, computational units, logic, functional units, processes, operations, virtual entities, and/or modules in accordance with exemplary embodiments, but the application 570 is not meant to be a limitation.

The operating system 550 controls the execution of other computer programs, and provides scheduling, input-output control, file and data management, memory management, and communication control and related services. It is contemplated by the inventors that the application 570 for implementing exemplary embodiments may be applicable on all commercially available operating systems.

Application 570 may be a source program, executable program (object code), script, or any other entity comprising a set of instructions to be performed. When a source program, then the program is usually translated via a compiler (such as the compiler 540), assembler, interpreter, or the like, which may or may not be included within the memory 520, so as to operate properly in connection with the O/S 550.

The I/O devices 530 may include input devices such as, for example but not limited to, a mouse, keyboard, scanner, microphone, camera, etc. Furthermore, the I/O devices 530 may also include output devices, for example but not limited to a display, etc. Finally, the I/O devices 530 further include devices that can communicate data, both inputs and outputs, for instance but not limited to, a NIC or modulator/demodulator (for accessing remote devices, other files, devices, systems, or a network), a radio frequency (RF) or other transceiver, a telephonic interface, etc. The I/O devices 530 may also include components for communicating over various networks, such as the Internet or intranet.

When the computer 500 is in operation, the processor 510 is configured to execute software stored within the memory 520, to communicate data to and from the memory 520, and to generally control operations of the computer 500 pursuant to the software. The application 570 and the O/S 550 are read, in whole or in part, by the processor 510, perhaps buffered within the processor 510, and then executed.

When the application 570 is implemented in software it should be noted that the application 570 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 570 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1 to 4, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

**Claims**

1. A method for checking locality of a first device (10) and a second device (20) to determine if data can be shared between the first and second devices, the method comprising:

   generating by the first device and obtaining (110) by the second device a secret (S);
   generating (120), at the second device, an irreversible value (H) based on the secret (S);
   displaying (130), at the second device, a visual representation of the irreversible value (H);
   capturing (140), at the first device, the displayed visual representation; and
   processing (150), at the first device, the captured visual representation to determine if the second device is within the locality of the first device,
   wherein processing the captured visual representation comprises:

      extracting (160) the irreversible value (H) from the captured visual representation;
      analyzing (170) the secret (S) and the extracted irreversible value (H) to determine an analysis result; and
      determining (180) if the second device is in the locality of the first device based on the analysis result.

2. The method of claim 1, wherein analyzing comprises:

   generating (172) a verification value (Hv) based on the secret (S);
   comparing (174) the verification secret (Hv) and the extracted irreversible value (H) to determine a comparison result; and
   determining (176) if the second device is in the locality of the first device based on the comparison result.

3. The method of claim 2, wherein, if the comparison result indicates the verification secret (Hv) matches the extracted irreversible value (H), it is determined that the second device is within the locality of the first device, and wherein if the comparison result indicates the verification secret (Hv) does not match the extracted irreversible value (H), it is determined that the second device is not within the locality of the first device.

4. The method of any of claims 1 to 3, further comprising:

   generating, at the second device, a second device timestamp value (T2),
   wherein generating an irreversible value (H) at the second device is further based on the second device timestamp value (T2),
   and wherein processing the captured visual representation comprises:

      generating a first device timestamp value (T1);
      and analyzing the secret (S), the first device timestamp value (T1) and the extracted irreversible value (H) to determine an analysis result.

5. The method of claim 4, wherein analyzing comprises

   generating a verification value (Hv) based on the secret (S) and the first device timestamp value (T1);
   comparing the verification secret (Hv) and the extracted irreversible value (H) to determine a comparison result; and
   determining if the second device is in the locality of the first device based on the comparison result.

6. The method of claim 4 or 5, further comprising:
   synchronising a reference clock of the first and second devices, and wherein the first (T1) and second (T2) device timestamp value are generated based on the synchronised reference clock of the first and second devices, respectively.

7. The method of any of claims 1 to 6, wherein displaying a visual representation of the irreversible value (H) comprises:

   generating an image comprising a watermark, the watermark having the irreversible value (H) embedded therein; and
   displaying, as the visual representation of the irreversible value, the generated image with watermark.

8. The method of claim 7, wherein the watermark is generated using a fragile watermarking technique.

9. The method of claim 7 or 8, wherein processing the captured visual representation comprises:

    detecting the presence of the watermark in the captured visual representation;
    as a result of not detecting the presence of the watermark, determining that the second device is not within the locality of the first device; and
    as a result of detecting the presence of the watermark, extracting the irreversible value (H) from the detected watermark.

10. The method of any of claims 1 to 6, wherein displaying a visual representation of the irreversible value (H) comprises:

    generating a machine readable code comprising the irreversible value (H); and
    displaying, as the visual representation of the irreversible value, the machine readable code, and preferably wherein the machine-readable code comprises at least one of:

        a linear barcode; and
        a 2D matrix code.

11. A method for establishing a communication link between a first device and a second device, the method comprising:

    checking locality of the first device and the second device according to any of claims 1 to 10;
    responsive to determining that the second device is within the locality of the first device, establishing a communication link between the first device and the second device.

12. A computer program comprising computer program code means which is adapted, when said computer program is run on a computer, to implement the method of any of claims 1 to 11.

13. A first device (10) configured to check whether a second device is in the same locality as the first device , for determining if data can be shared between the first and a second device, the first device comprising:
    a first processing unit configured to:

        issue a secret;
        capture a visual representation of an irreversible value (H) based on the secret displayed by the second device;
        extract the irreversible value (H) from the captured visual representation;
        analyze the secret (S) and the extracted irreversible value (H) to determine an analysis result; and
        determine if the second device is in the locality of the first device based on the analysis result.

14. A second device (20) configured to share data with a first device, the second device comprising:
    a second processing unit configured to control the second device to:

        obtain a secret from the first device;
        generate an irreversible value (H) based on the secret (S); and
        display a visual representation of the irreversible value (H).

15. A data sharing system comprising:

        a first device (10) according to claim 13; and
        a second device (20) according to claim 14,
        wherein the first device is configured to check the locality of the first device and the second device for determining if data can be shared between the first and second devices.

16. The method of claim 4 further comprising rounding at least one of the first and second timestamp values according to a target accuracy value.

17. A mobile computing device comprising the first device of claim 13.

FIG. 1

FIG. 2

**Transmitter** 310

**Receiver** 320

(i) Time Synchronisation

(ii) Generate S

(iii) Send S

(iv) Calculate H

Refresh every ΔT

(v) Display H

(vi) Capture/Scan H

(vii) Generate Hv

(viii) Compare Hv & H

FIG. 3

FIG. 4

FIG. 5

Europäisches
Patentamt

European
Patent Office

Office européen
des brevets

## EUROPEAN SEARCH REPORT

Application Number

EP 21 20 5159

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/130168 A1 (NAYSHTUT ALEX [IL] ET AL) 10 May 2018 (2018-05-10) <br> * paragraph [0018] * <br> * paragraph [0023] – paragraph [0051] * <br> ----- | 1-17 | INV. <br> H04N21/8358 <br> H04N21/4627 <br> G06F21/10 |
| X | US 2017/124297 A1 (BALDWIN JAMES ARMAND [US] ET AL) 4 May 2017 (2017-05-04) <br> * paragraph [0119] – paragraph [0128] * <br> * paragraph [0140] – paragraph [0155] * <br> * paragraph [0309] – paragraph [0312] * <br> ----- | 1-17 | |
| A | WO 2015/067725 A1 (SCANTRUST SA [CH]) 14 May 2015 (2015-05-14) <br> * paragraph [0030] * <br> ----- | 10 | |

TECHNICAL FIELDS
SEARCHED      (IPC)

H04N
G06F

The present search report has been drawn up for all claims

| Place of search | Date of completion of the search | Examiner |
|---|---|---|
| Munich | 17 March 2022 | Vaquero, Raquel |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## EP 4 175 310 A1

ANNEX TO THE EUROPEAN SEARCH REPORT
ON EUROPEAN PATENT APPLICATION NO.

EP 21 20 5159

This annex lists the patent family members relating to the patent documents cited in the above-mentioned European search report.
The members are as contained in the European Patent Office EDP file on
The European Patent Office is in no way liable for these particulars which are merely given for the purpose of information.

17-03-2022

| Patent document cited in search report | Publication date | Patent family member(s) | Publication date |
|---|---|---|---|
| US 2018130168 A1 | 10-05-2018 | CN 110036391 A | 19-07-2019 |
| | | EP 3539049 A1 | 18-09-2019 |
| | | US 2018130168 A1 | 10-05-2018 |
| | | US 2019228496 A1 | 25-07-2019 |
| | | US 2021241409 A1 | 05-08-2021 |
| | | WO 2018089151 A1 | 17-05-2018 |
| US 2017124297 A1 | 04-05-2017 | CA 3002977 A1 | 11-05-2017 |
| | | DK 3371731 T3 | 17-02-2020 |
| | | EP 3371731 A1 | 12-09-2018 |
| | | US 2017124296 A1 | 04-05-2017 |
| | | US 2017124297 A1 | 04-05-2017 |
| | | US 2017124298 A1 | 04-05-2017 |
| | | US 2017124299 A1 | 04-05-2017 |
| | | US 2017124300 A1 | 04-05-2017 |
| | | US 2017124301 A1 | 04-05-2017 |
| | | US 2017124302 A1 | 04-05-2017 |
| | | US 2017124303 A1 | 04-05-2017 |
| | | US 2020192998 A1 | 18-06-2020 |
| | | WO 2017079658 A1 | 11-05-2017 |
| WO 2015067725 A1 | 14-05-2015 | CN 105706107 A | 22-06-2016 |
| | | EP 3066612 A1 | 14-09-2016 |
| | | ES 2718528 T3 | 02-07-2019 |
| | | JP 6505732 B2 | 24-04-2019 |
| | | JP 2016540329 A | 22-12-2016 |
| | | PL 3066612 T3 | 28-06-2019 |
| | | RU 2016122271 A | 11-12-2017 |
| | | US 2016267369 A1 | 15-09-2016 |
| | | US 2017124441 A1 | 04-05-2017 |
| | | US 2018197053 A1 | 12-07-2018 |
| | | WO 2015067725 A1 | 14-05-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8886939 B2, Kamperman

- US 201109668 A1, Singh